# EUROPEAN PATENT SPECIFICATION

(11) **EP 1 070 524 B1**
(45) Date of publication and mention of the grant of the patent: **03.01.2007**
(21) Application number: 00115009.3
(22) Date of filing: 21.07.2000
(51) Int. Cl.: A63F 13/10

(54) **A video game control method, a video game system and a storage medium**
Videospielsteuerverfahren, Videospielsystem und Aufzeichnungsmedium
Une méthode de contrôle de jeu vidéo, un système de jeu vidéo et un support d'enregistrement

(30) Priority: 23.07.1999 JP 20995599
(43) Date of publication of application: 24.01.2001
(73) Proprietor: Konami Corporation, Minato-ku, Tokyo (JP)
(72) Inventor: Shimomura, Satoshi, 4-15-3, Nishi-Shinjuku Shinjuku-ku Tokyo (JP); Watanabe, Tsutomu, 4-15-3, Nishi-Shinjuku Shinjuku-ku Tokyo (JP)
(74) Representative: Vossius & Partner

(56) References cited:
- PATENT ABSTRACTS OF JAPAN vol. 1996, no. 04, 30 April 1996 (1996-04-30) & JP 7 323154 A (CASIO COMPUT CO LTD), 12 December 1995 (1995-12-12)

## Description

The invention relates to a video game control method based on signals of an infrared remote controller (hereinafter, simply referred to as "remote controller"), in particular, a video system, a control method, and a storage medium which are capable of controlling to select a new card used in a video game, on the basis of contents of signals received from a remote controller of a house hold electric device such as a television set.

Nowadays, video game devices have been spread to many families rapidly. And there are various games, such as a role-playing game, a simulation game, a combat game, a puzzle game, and the like. Therefore, many mediums each of which includes a software program which can execute one of these games are available in store. Such a video game has been often played in a home video game device displaying game images on a home television monitor.

However, a portable video game device including a display device and a controller is recently on sale.

The portable video game may be classified into two types. One is a portable device which is capable of downloading a program and data from a video game device (that is, a base video game device) connected to the portable device, and playing a game taking over contents of the game played in the base video game device.

The other is a completely independent portable device. A program and data which are used in the independent portable device are in store in the form of a cassette incorporated into the device for each game. Also, there may be a dedicated game device which is produced with fixed hardware and software to play a specific games.

Hereinafter, the former portable video game device is referred to as "dependent type portable video game device", the later portable video game device is referred to as "independent type portable video game device". Further, "portable video game device" means the both types of portable device.

Such a portable video game device is easily carried outdoors, therefore, has a function taking advantage of the features. For example, most of a current portable video game devices can communicate by using an infrared communication function. Thereby, a plurality of portable video game devices can exchange game characters having a predetermined ability or perform real-time battle in a game.

A portable video game device is disclosed in JP-A - H07-323154, which receives signals from an infrared remote controller of an electric devices such as a home television set, a video tape recorder, and an air conditioner, determines strength information (of a game character), and play a battle game by comparing the determined strength information and other strength information sent from the other site.

In the portable video game device, infrared waveform pattern from a remote controller is stored in advance for each home electric device, and encodes the signals from the remote controller based on the corresponding pattern.

However, the portable video game device as disclosed in Japanese Laid Open Publication No. H7-323154 simply determines the strength information and stores it, therefore, the device can not substantially add an item used in a video game and store the item for later use when the device receives signals from the remote controller.

Further, the device can not ensure that new waveform pattern signals is encoded properly since the device determines received signals using the waveform patterns stored in advance.

It is therefore an object of the invention to provide a portable video game device which receives infrared signals from a remote controller of a home electric device, and changes a story or elements of a game on the basis of the signals.

Also, it is an object of the invention to provide a portable video game device which changes a story or elements of a game using invisible information such as infrared signals.

According to a first aspect of the invention, there is provided a method of controlling a video game by using a communication function, comprising the steps of receiving infrared signals which are sent from a remote controller of an electric device and include information used to control the electric device, generating a code by translating the received signals according to rules made in advance, and adding an item in the video game on the basis of the code.

According to a second aspect of the invention, there is provided a video game system which performs a predetermined video game. The video game system comprises a receiving unit which receives infrared signals which are sent from a remote controller of an electric device and include information used to control the electric device, a generating unit which generates a code by translating the received signals according to rules made in advance, and an adding unit which adds an item in the video game on the basis of the code.

According to a third aspect of the invention, there is provided a recording medium readable by a computer, tangibly embodying a program of controlling a video game using a communication function. The program comprises the steps of receiving infrared signals which are sent from a remote controller of an electric device and include information used to control the electric device, generating a code by translating the received signals according to rules made in advance, and adding an item in the video game on the basis of the code.
Fig. 1 shows a block diagram of a base video game device;
Fig. 2 shows a block diagram of a portable video game device;
Fig. 3 shows a block diagram of another portable video game device;
Fig. 4 shows a waveform pattern of infrared signals sent from a remote controller;
Fig. 5 shows a repeat pattern of infrared signals sent from a remote controller;
Fig. 6 shows a flowchart which represents steps from step of receiving infrared signals sent from a remote controller to step of encoding the signals;
Fig. 7 shows a list of creature cards used in a card game according to an embodiment of the invention;
Fig. 8 shows an image of a card game displayed in a monitor according to an embodiment of the invention; and
Fig. 9 shows a flowchart which represents a process of selecting a card used in a game using a code determined based on infrared signals from a remote controller.

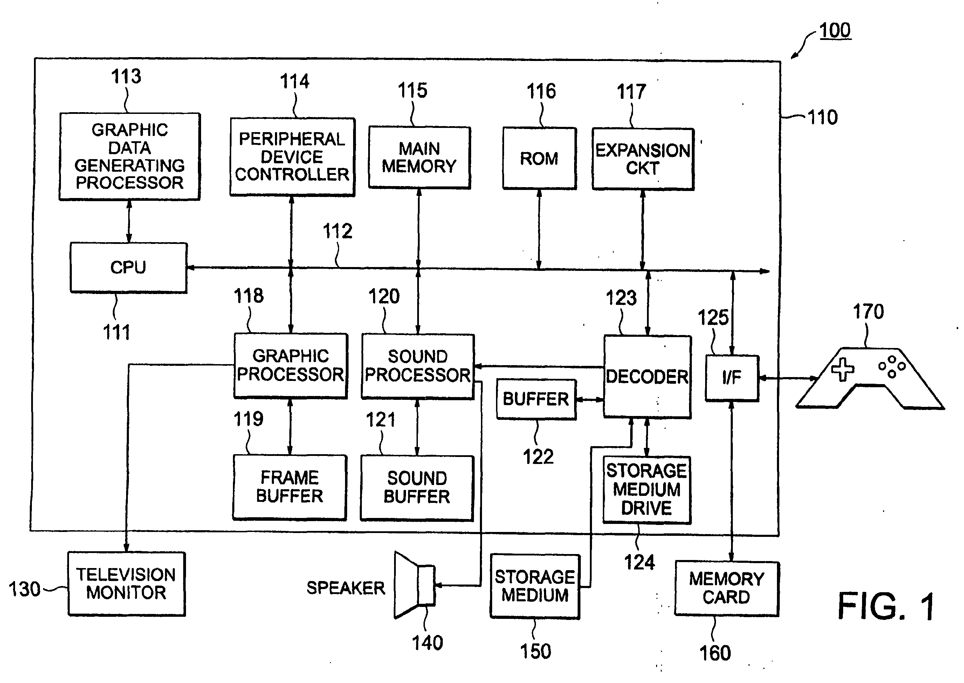

Referring to Fig. 1, description is at first made about a video game device which works as a base video game device. As described above, there are various types of video game devices. Therefore, the video game device shown in Fig. 1 is merely exemplified and may be changed to any other game device or machines.

The device shown in Fig. 1 is a base device connected to the dependent type portable video game device.

The video game device shown in Fig. 1 includes a video game device body 110, a television monitor 130, a speaker 140, a storage medium 150, a memory card 160, and a controller 170. And the elements 130 to 170 are connected to the body 110.

The video game device body 110 includes a CPU 111, a bus 112 connected to the CPU 111, and some elements connected to the bus 112.

The bus 112 includes an address bus, a data bus, and a control bus. A graphic data generating processor 113, a peripheral device controller 114, a main memory 115, a ROM 116, an expansion circuit 117, a graphic processor 118, a frame buffer 119, a sound processor 120, a sound buffer 121, a decoder 123, a buffer 122, a storage medium drive 124, and an interface circuit 125 are connected to the bus 112.

The television monitor 130(hereinafter, referred to as a "monitor") is connected to the graphic processor 118. Further, the speaker 140 is connected to the sound processor 120, and the memory card 160 and the controller 170 are connected to the interface circuit 125.

As mentioned above, the video game device shown in Fig. 1 is an example suited for home use. In this case, it is general that the monitor of a home television is used as the monitor 130 and a speaker of the home television is used as the speaker 140.

In the case where the method according to the invention is applied to the arcade game device, the above mentioned elements shown in Fig. 1 may be all incorporated into a single body.

Also, when the method of the invention is used in a personal computer of a workstation, a CRT display connected to the personal computer may be used as the monitor 130, and an input device such as a keyboard or a mouse is used as the controller 170.

Then, description is made about the game device body 110 in more detail.

The CPU 111 is, for example, a 32-bits RISC (reduced instruction set computer), and controls all elements of the game device by executing an operating system program stored in a ROM 116, which is described later.

The graphic data generating processor 113 serves as a co-processor of the CPU 111. That is, the processor 113 executes calculation for coordinate transformation and a light source, for example, operation of fixed decimal or vector, with parallel processing to display a pseudo three-dimensional image.

The peripheral device controller 114 executes control operation for interruption, time, memory, and direct memory access (DMA) transfer. The ROM 116 stores, as described above, the operating system program which controls operations of the elements in the game device.

The expansion circuit 117 decodes still or animated image data read out from the storage medium 150 and stored in the main memory 115, under the control of the aforementioned CPU 111, and stores the decoded image data back in the main memory 115. Specifically, the expansion circuit 117 is capable of carrying out high-speed execution of inverse discrete cosine transform (inverse DCT) operations, and it is also capable of expanding compressed data read out from the storage medium 150 in accordance with still color image compression standards (known as JPEG) or cumulative media moving image encoding standards (known as MPEG).

The graphic processor 118 renders polygon images and stores them into the frame buffer 119 in response to instructions from the CPU 111.

The frame buffer 119 includes a display area and a non-display area. The display area is an area for storing images corresponding to a display area on the monitor 130. The non-display area is an area for storing animation images used to produce two-dimensional images in the display area and textures used to produce pseudo three-dimensional images.

In some case, the frame buffer 119 includes a color lookup table (GLUT) which corresponds a color of pixel to a number. Also, data in the display area in the frame buffer 119 are transferred to the monitor 130 at high-speed. The frame buffer 119 consists of a so-called dual-port RAM, and it is capable of simultaneously receiving images from the graphic data generating processor 113 (CPU 111) or transferring data from the main memory 115, and reading out data in order that the data can be displayed to the monitor 130.

The sound processor 120 outputs music or an effective sound via speaker 140 by regenerating ADPCM data in the storage medium 150 or voice data stored in the sound buffer 121, or by modulating and regenerating the voice data.

The decoder 123 decodes a program or data which are stored in the storage medium 150 and are appended an error correction code (ECC), and provides the program or the data to the main memory 115 or the sound processor 120.

The buffer 122 temporarily stores the program and/or data regenerated from the storage medium 150. The buffer 122 has a memory capacity of, for example, 32 kilobytes.

The storage medium drive 124 may be a DVD-ROM drive, a CD-ROM drive, an optical disk drive, or the like. The storage medium drive 124 reads a program and another data out of the storage medium 150, and provides them to the decoder 123.

The interface circuit 125 sends an operation signal received from the controller 170 to the CPU 111. Also, the interface circuit 125 reads out the contents of the memory card 160 to supply the contents to the main memory 115, and simultaneously stores data into the memory card 160 in response to an instruction of the CPU 111.

A storage medium 150 stores a program and image data required to play a game. The program and the image data are read from the storage medium 150 to a video game device via the storage medium drive 124. The storage medium itself is, for example, a DVD-ROM, a CD-ROM or an optical disk.

The memory card 160 stores values of a various of parameters in order to, for example, maintain the status at the time point when a game terminates last time. Herein, a card type memory is used as the memory card 160 in the illustrated example, but many types of memories may be used.
To store the value, the memory card 160 is inserted into a slot of the interface circuit 125.

As described later, the dependent type portable video game device is also inserted into the slot of the interface circuit 125, and a program and data in the video game body 110 are transmitted to the portable video game device.

The controller 170 is manipulated to play a game by a user. The controller 170 includes direction buttons for moving a character on the monitor upwards, downwards, leftwards and rightwards, and a plurality of function buttons for instructing one of specific functions, for example, starting the game or selecting items.

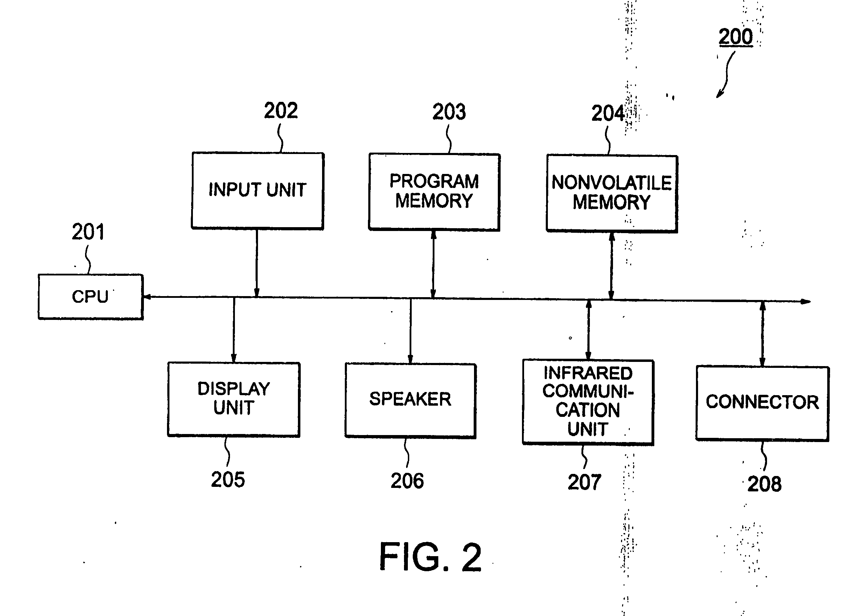

Next, a dependent type portable video game device will be explained using Fig. 2. This system is the same as the system disclosed in Japanese Laid Open Publication (JP-A) No. H11-7504 (namely, 7504/1999) "Memory Card Device, Video Game System," and substantially adds to the above-mentioned memory card 160 input device and display device required to play a game.

The dependent type portable video game device 200 comprises a CPU 201, an input device 202, a program memory 203, a nonvolatile memory 204, display device 205, a speaker 206, an infrared communication device 207, and a connector 208.

The CPU 201 controls the transmitting and receiving of data between each component element, executes a game program, and achieves infrared communications in accordance with program commands loaded into the program memory 203, which will be explained later.

The Input device 202 comprises a plurality of buttons in addition to a cross key, and a user play a game by pressing these buttons as needed. The program memory 203 is comprised, for example, of around 128 kilobytes of storage capacity, and the game program and required data which are temporarily stored in the nonvolatile memory 204 are loaded in the memory 203 for execution of the game.

The nonvolatile memory 204 is comprised, for example, of around 2 kilobytes of capacity, and utilizes a semiconductor memory device, which, like a flash memory, retains the state that is stored even when the power is cut off. Further, because the video game device 200 comprises a battery (not shown in the figure), it is possible to use a static random access memory (SRAM) as the nonvolatile memory 204.

The main component elements of the above-mentioned memory card 160 are the same for this memory. A program and data received via either the connector 208 or the infrared communication device 207 are stored in the nonvolatile memory 204. The above-mentioned data, for example, might indicate the progress of a game, or might indicate the attributes or ability of a character that appears in a game. The Display device 205 is a display device for displaying images of the game, and utilizes, for example, a liquid crystal display (LCD) device. The speaker 206 outputs sound either in accordance with the game, or in accordance with the operation of the dependent type portable video game device.

The infrared communication device 207 is a device for transmitting and receiving data via infrared communications with another portable video game device, for example. A program and data received via this communication device 207 using a prescribed protocol is stored in the nonvolatile memory 204 as described above, and thereafter, is provided to the program memory 203. Conversely, when data are transmitted via infrared communication device 207, a program in the program memory 203 fetches data from either in the program memory 203 or in the nonvolatile memory 204, and controls such that the data are transmitted using a prescribed protocol. In the present invention, it is sufficient that a signal from a remote controller can be received, and so long as this signal can be received, a method of communicating is not limited to infrared communication.

The idea behind the above-mentioned dependent type portable video game device 200 was to enable a program and required data to be fetched from the above-mentioned video game device body 110 so that a game can be played anywhere. Such the infrared communication function is added to this video game device 200 for the purpose of making full use of the portability thereof, and the present invention can be implemented by adding the infrared communication function to a video game device body 110, which is used inside a home.

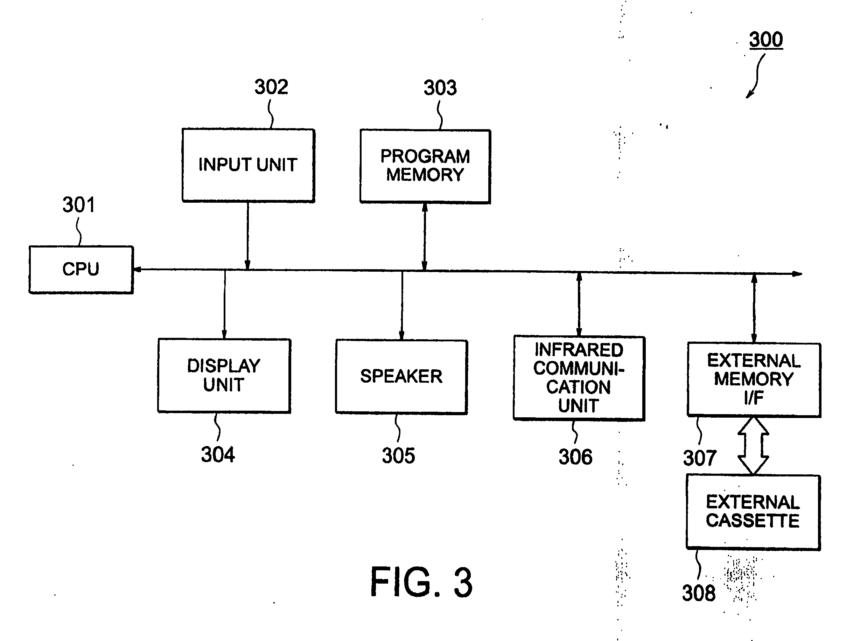

Next, a second embodiment of a video game device implemented by the present invention will be explained by referring to Fig. 3. This is equivalent to the above-mentioned independent type portable video game device, and by inserting into this system a cassette, which is specially prepared therefor, the device can play a game independently on its own. Further, this device is constituted the same as a system disclosed in Japanese Laid Open Publication (JP-A) No. H02-210562 (namely, 210562/1990) "Copy Prevention System for External Memory Unit."

The independent type portable video game device 300 comprises a CPU 301, an input device 302, a program memory 303, a display device 304, a speaker 305, an infrared communication device 306, an external memory interface 307, and an external cassette 308.

The CPU 301 controls the transmitting and receiving of data between each component element, executes a game program, and achieves infrared communications in accordance with program commands loaded into the program memory 303, which will be explained below.

The Input device 302 comprises a plurality of buttons in addition to a cross key, and a user play the game by pressing these buttons as needed. A game program and required data are loaded into the program memory 303 for playing the game, and the game program and the data are stored in the external cassette 308.

The display device 304 is a display device for displaying images of the game, and utilizes, for example, a liquid crystal display (LCD) device. The speaker 305 outputs sound either in accordance with the game, or in accordance with the operation of the independent type portable video game device.

The infrared communication device 306 is a device for transmitting and receiving data via infrared communications with another portable video game device, for example. Data received via this device using a prescribed protocol is processed by a program loaded in the program memory 303. Conversely, when data is transmitted via infrared communication device 306, this program fetches data from either in the program memory 303 or from another area, and controls such that the data are transmitted using a prescribed protocol.

The external memory interface 307 operates so as to enable access to a program and data in the external cassette 308 at all times. Whereas the above-mentioned dependent type portable video game device is unable to execute a game until after a program and required data have been downloaded collectively from the video game device body, this independent type portable video game device 300, when the external cassette 308 is mounted as-is, accesses this cassette at any time during a game, and treats this cassette as a portion of the video game device.

A game program, and data used in this game are stored in external cassette 308. This cassette is ordinarily sold for each game, and it is possible to switch to a game that is easily executed on the video game device 300 by exchanging cassette 308 for a different one. Further, data received via infrared communication device 306, or data created by a program can also be stored in cassette 308. The above-mentioned data, for example, might indicate the progress of the game, or might indicate the attributes or capabilities of a character in the game.

Next, the process for receiving an infrared signal transmitted from a remote controller of a home television, a video or an air conditioner, for example, using infrared communication device of either the above-mentioned dependent type or independent type portable video game device will be explained in detail.

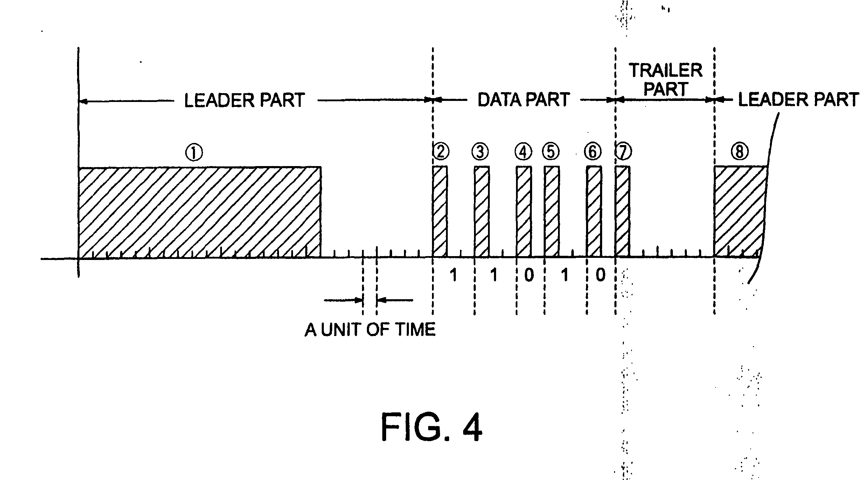

Fig. 4 shows one example of a waveform pattern of a signal transmitted from a television remote controller. As shown in the figure, the waveform pattern transmitted from the remote controller ordinarily is broadly divided into a control information part, which indicates the beginning and the end of a signal, and a data part, which denotes the kind of television to which commands are being transmitted, and the contents of the commands. Further, the above-mentioned control information part is further divided into a leader part, which locates the beginning of the signal, and a trailer part, which denotes the end of the signal.

The data part is expressed by a PPM mode (pulse position modulation mode), which performs modulation in accordance with the interval after a pulse is outputted until the next pulse is outputted. The data part is encoded to a "1" or "0" code in accordance with this interval of each pulse. A sequence of such signals is ordinarily transmitted repeatedly with certain rules while a remote control button is being pressed. Furthermore, the above-mentioned structure and modulation mode are not standardized among manufacturers, and some manufacturers, for example, produce remote controllers which send signals having no leader part.

In Fig. 4, a circled numeral is assigned to each pulse, indicating the number of transmitted pulses following the start of remote control signal transmission.

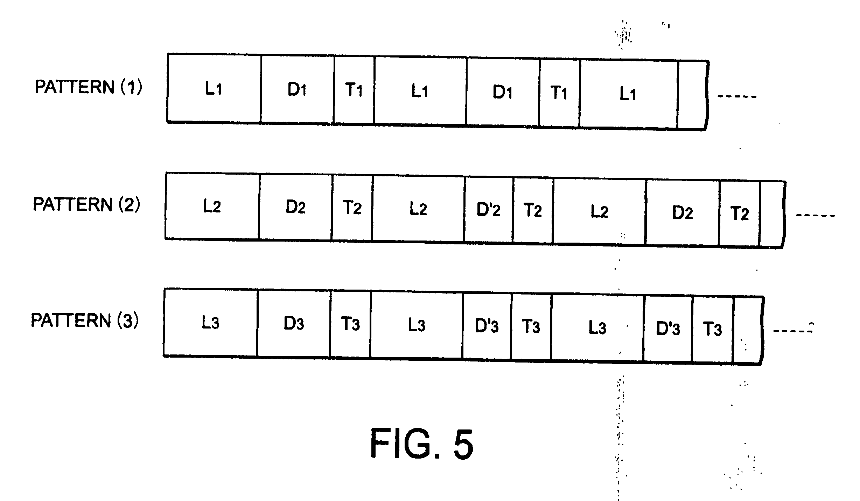

Fig. 5 shows three repetitive patterns of the above-mentioned remote control signal. Practically, most of manufacturers utilize one of these patterns.

Here, L indicates the leader part, D indicates the data part, and T indicates the trailer part, and the same reference numerals are indicative of having the same waveform pattern.

As for pattern (1), when an arbitrary button of a remote controller is pressed, first leader part L₁ is sent, and after that data part D₁ and trailer part T₁ are sent. Thereafter, a group of these three (L₁, D₁, T₁) is repeatedly sent while the remote control button is being pressed.

As for pattern (2), when an arbitrary button of a remote controller is pressed, the first leader part L₂ is sent, and after that, data part D₂ and trailer part T₂ are sent. Thereafter, subsequent thereto, leader part L₂, data part D'₂, which omits a part of the contents of the data part D₂, and trailer part T₂ are sent, and thereafter, the leader part L₂, the data part D₂ and the trailer part T₂ are sent once again. Thereafter, a group of three (L₂, D₂, T₂), and a separate group of three (L₂, D'₂, T₂) are alternately sent while the remote control button is being pressed.

As for pattern (3), when an arbitrary button of a remote controller is pressed, the first leader part L₃ is sent, and after that, data part D₃ and trailer part T₃ are sent. Thereafter, subsequent thereto, the leader part L₃, data part D'₃, which omits a part of the contents of the data part D₃, and the trailer part T₃ are repeatedly sent, and thereafter, a group of these three (L₃, D'₃, T₃) is repeatedly sent while the remote control button is being pressed.

Next, returning once again to Fig. 4, an example of remote control signal encoding will be explained. In the case of the example of Fig. 4, when the interval of a graduation of the horizontal axis is set as one unit of time, and an output period of a pulse of 16 units of time is followed by a non-output period of eight units of time, this denotes a leader part, and when either an output period of a pulse of one unit of time is followed by a non-output period of one unit of time (corresponding to code "0"), or an output period of a pulse of one unit of time is followed by a non-output period of two units of time (corresponding to code "1"), these denote a data part, and when an output period of a pulse of one unit of time is followed by a non-output period of six units of time, this denotes a trailer part.

According to encoding rules such as those described above, it is clear that the data part of Fig. 4 is transmitting a sequence of "11010" as data. The actual sequence is long, exceeding 32 bits, but in order to simplify the explanation, the above-mentioned five bits length of data will be examined here. The first half of the data part in most cases constitutes an identification code of a manufacturer classification and a product type, and in accordance with this information, the television remote controller of a certain manufacturer is controlled such that it will not operate another product of that manufacturer, or a video or the like of another manufacturer. Further, the transmission of a signal like this is possible if a remote controller, which is the transmitting side, and a television, which is the receiving side adhere to the same encoding rules, but such the encoding rules are not standardized among all the manufacturers of household electrical products. Therefore, a signal, which is encoded as "1001' in accordance with the rules of manufacturer A, is either encoded as "110001" by the rules of company B, or cannot be encoded at all because the rules are not compatible.

Meanwhile, if consideration is given to making a new development occur, or causing a new character or essential element to appear in a video game on the basis of a code obtained in this manner (examples of video game applications will be explained in detail below), there are cases in which repeatability is required, that is, the same effect must be imparted to a video game at all times when the same channel is pressed using remote controllers of the same model television by the same manufacturer. For example, by making it so that, when a certain channel is pressed using a remote controller of a certain model television by a certain manufacturer, a specific card is added in a card game, and with another television or another channel, this card is not added and not duplicated, each card added to the card game becomes closely related to a certain television channel (Naturally, when there are fewer kinds of cards than there are variations of remote control signals, there are times when the same kind of card is added even with a different channel). As a result thereof, when a user wants to add a certain specific card, the user goes to a friend's house and receives a remote control signal, or a rumor is spread to the effect that "this kind of card is added with a certain channel of a certain television," enabling this card game to provide diversified enjoyment.

Therefore, in order for a signal transmitted from a remote controller to be reflected in the contents of a video game, it is necessary for the contents of this signal to be encoded with repeatability.

Thus, it becomes necessary to store beforehand for each manufacturer the waveform pattern and encoding rules of the remote control signals of all manufacturers. But in the future, if new encoding rules are adopted, or different rules are standardized, there is the possibility that the signal of this remote control will not be able to be encoded with repeatability. Accordingly, for the present invention, encoding of a remote control signal was performed by focusing attention on the one characteristic of a remote control signal that practically all manufacturers have in common, without storing beforehand information related to the waveform patterns and encoding rules of each manufacturer. This characteristic is the fact that the non-output period of the trailer part is longer than that of the data part.

Here, since it is sufficient to be able to encode a remote control signal with repeatability, and to obtain a value comprising two types of code, there is no need to actually identify which pattern each manufacturer sets as "1", and which pattern it sets as "0". Consequently, in the present invention, when the range of the data part is determined, and there is repetitious information as shown in Fig. 5, these repetitions are compared, the legitimacy of the data is checked, two patterns are extracted from the intervals between each pulse within the data part, and using a fixed rule, the one side is assigned to "0", and the other side is assigned to "1". In this manner, the ultimately generated sequence comprised of "0" and "1" is outputted as an encoded remote control signal.

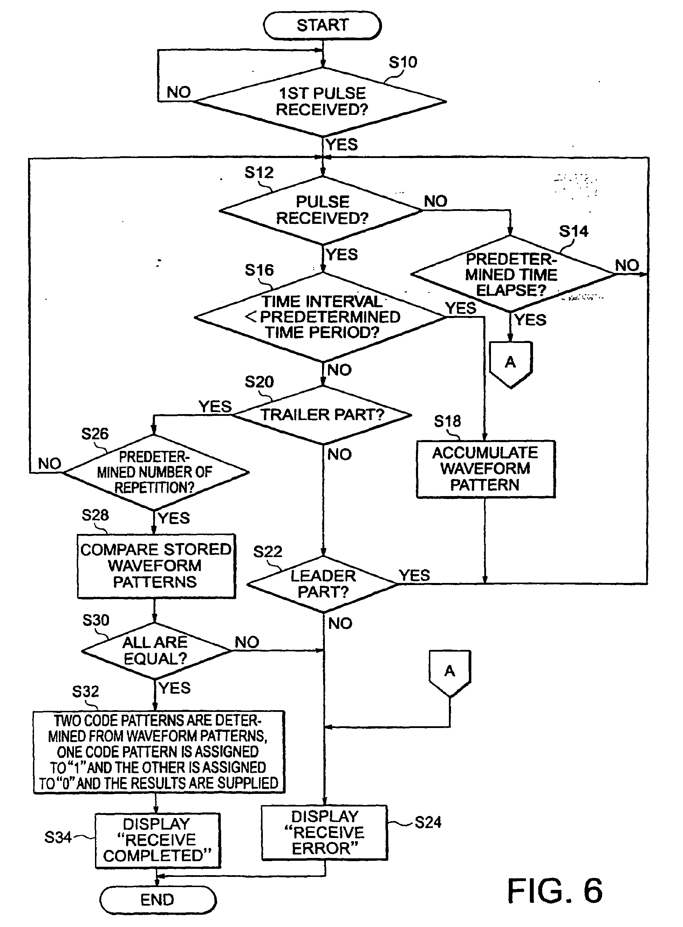

Next, the remote control signal encoding process described above will be explained in line with the flowchart shown in Fig. 6. This encoding process is realized by a program, which is stored in the program memory of a portable video game device, and controls infrared communication device. Further, the explanation will be given based on the pulse output pattern having a leader part shown in Fig. 4.

Firstly, in Step S10, the above-mentioned infrared communication device waits for the first pulse of a remote control signal. This first pulse, as shown in Fig. 4, is usually a pulse constituting a leader part. When the first pulse is received (Step S10 (YES)), the infrared communication device continues to wait in Step S12 for a second pulse, which is transmitted from the remote controller. Here, when the interval of the first pulse and the second pulse shown in Fig. 4 is larger than the interval between data part pulses, but if the second pulse cannot be received within a prescribed period which is greater than the interval (Step S14 (YES)), processing jumps to Step S24, a "Receive Error" message is displayed on the display device of the portable video game device, and processing ends. If the second pulse is received (Step S12 (YES)), a determination of the pulse interval is made in Step S16.

In a case in which this interval is not in a prescribed range (either within a first range (one unit of time shown in Fig. 4 ± tolerance) or within a second range (two units of time shown in Fig. 4 ± tolerance)) (Step S16 (NO)), processing jumps to Step S20, and a determination is made as to whether or not a trailer part was received. When the second pulse shown in Fig. 4 is received, it is determined in Step S22 that the leader part has been received, and processing returns to Step S12, where the infrared communication device waits for the next pulse.

When this interval is within a prescribed range (Step S16 (YES)), since the interval with the pulse of directly prior constitutes either one unit of time or two units of time, and it is clear that it is the data part, processing proceeds to Step S18, and the waveform pattern comprising the above-mentioned directly prior pulse and the above-mentioned interval is stored. Because this storage is done cumulatively, at the point in time when the data part ends, the data part waveform pattern itself has been stored. If the data part is transmitted repeatedly, a waveform pattern is stored separately for each repetition thereof.

By repeating these processes, all the waveform patterns of a data part are stored up until the trailer part shown in Fig. 4 is received.

In Step S20, when reception of the trailer part is confirmed, processing jumps to Step S28.

Furthermore, because a remote control signal is repeatedly outputted as shown in Fig. 5, the above-mentioned processing is repeated only a prescribed number of repetitions, and a second and a third waveform pattern are stored (Step S28). The flowchart shown in Fig. 6 is premised on a case in which a signal having the same data part as the pattern (1) of Fig. 5 is repeated. However, no matter what the repetitive pattern, it can be handled using a flowchart.

In Step S28, when it is determined that the repeating of a prescribed number of repetitions (for example, three times) has ended, the first through the third waveform patterns produced from the repetition are compared with one another in Step S30. The fact that all of these waveform patterns are identical signifies that the contents of the repeatedly transmitted data part were all correctly received.

In Step S30, these waveform patterns are checked to determine if they are identical or not, and when they are all the same, processing proceeds to Step S34, but otherwise, "Receive Error" is displayed (Step S24). In accordance therewith, when a part of the data part is received, it constitutes a receive error, and in the end, the reliability of remote control signal reception is enhanced, and encoding repeatability is ensured. But such a received contents check processing, which compares a remote control signal that is repeatedly transmitted in this manner, can also be omitted due to the nature of a video game, or for other reasons. That is, reception can also be ended at the point in time when the trailer part is firstly received.

In Step S32, analysis is performed on one of the above-mentioned waveform patterns, and two different patterns are extracted. That is, a pattern in which the pulse of an output period of one unit of time is followed by a non-output period of one unit of time, and a pattern in which the pulse of an output period of one unit of time is followed by a non-output period of two units of time are extracted here, and the former pattern is assigned to "0", and the latter pattern is assigned to "1", respectively.

In this manner, a code sequence corresponding to a normally received data part (here, "11010") is thereafter used to determine a new character in a video game.

Next, a typical example of a video game that is capable of utilizing these codes will be briefly explained here.

This game is a competition-type card game played on a portable video game device, such as that disclosed by the applicants in Japanese Unexamined Patent Publication (JP-A) No. 2000-157744. Around 350 kinds of cards are provided for this card game. Data related to these cards is stored in the nonvolatile memory 204 via the connector 208 of Fig. 2 for an dependent type portable video game device, and is stored in the external cassette 308 shown in Fig. 3 for an independent type portable video game device, and when a card game is played, these data are loaded as needed in the respective program memories (203, 303). A set of these cards is placed in order in a storage portion called a "bag" in the game.

In the above-described dependent type portable video game device, by exchanging programs and required data with the video game device body, it becomes possible to play any of the above-mentioned games. The procedure for playing a game on the above-mentioned aspect will be briefly explained here.

It is supposed that the initial state is one in which the storage medium 150, which stores the program for the above-mentioned card game, is connected to the video game device body 110 shown in Fig. 1, and the above-mentioned dependent type portable video game device 200 is mounted as the memory card 160. In this state, the connector 208 of dependent type portable video game device 200 is connected to the interface 125 of the video game device body 110.

Thereafter, in a state in which the card game is being executed on the video game device body 110, a determination is made as to whether or not dependent type portable video game device 200 is connected. When this video game device 200 is not connected, the card game continues, but in a case in which video game device 200 is connected, CPU 111 of the video game device body 110 sends to the CPU 201 of the video game device 200 a program download request command, and performs a polling operation to receive a response from the CPU 201.

In the CPU 201 of the video game device 200, when the above-mentioned program download request command is received, a state, which enables program download, is set, and when this state is achieved, a program download authorized status is sent to the CPU 111 of the video game device body 110.

When the video game device body 110 receives the authorized status, it reads out the card game program for the video game device 200 from the storage medium 150, and sends the program to the video game device 200. Thereafter, the CPU 111 enters a state in which it waits by polling a response from the video game device 200. If necessary, the data required by the program can be read out from the main memory 115, for example, and also sent to the video game device 200 at the same time as this transmission. The above-mentioned data also comprise the contents of the bag including the cards used in the game.

The program read out from the storage medium 150 is written to the program memory 203 of the video game device 200. Thereafter, the video game device 200 enters a state in which it is able to execute this program, and sends to the video game device body 110 a status indicating this state. Further, the above-mentioned data are stored in the nonvolatile memory 204.

When the video game device body 110 receives the above-mentioned status, it sends a program start command to the video game device 200. Upon receiving the program start command, the video game device 200 waits for a player command, and starts this program. When this program is executed, the video game device 200 is ordinarily detached from the video game device body 110, becoming a portable video game device for executing the card game.

By so doing, a program and data are sent from the video game device body 110 to the portable video game device 200, but a player can also direct these transmissions separately via the controller 170 of the video game device body 110.

By playing the card game on the above-mentioned portable video game device 200, the competition status of the game and the status of the cards in the bag change. The results of the change are stored in the nonvolatile memory 204

When a player once again plays a card game on the video game device body 110, the storage medium 150 which stores the above-mentioned card game program is connected to the video game device body 110, and the above-mentioned dependent type portable video game device 200 is mounted as the memory card 160. In accordance therewith, the card game program is loaded into the main memory 115 from the storage medium 150, the above-mentioned data are loaded into the main memory 115 as needed from the portable video game device 200, and it becomes possible to execute the game. The above-mentioned loading operations can be started either automatically or by player's command.

In this card game, each player by turns shows a card in a prescribed location (that is, a space on the screen) of the display device (205, 304) of the portable video game device and the game progresses by reducing an opponent's life points (LP) via card superiority. One of the characteristics of this card game is that each player can specify attack, defense for each card shown in the space on the screen, and relative to a card shown in the space on the screen, can specify attack, defense for one card versus a plurality of cards, and as a result thereof, a variety of competition is made possible, such as one card versus a plurality of cards competition.

Another characteristic of this card game is that, among the above-mentioned cards, there are provided a number of types of cards (field cards), which change the combat game field, that is, the competition environment, which is set in the game. More specifically, for example, when there are a card that represents a forest and a card that represents a wilderness are provided, during a card game it is possible to change from an ordinary field (normal field) to an above-mentioned field. Therefore, a player can enjoy the card game by taking into consideration the offensive and defensive power index of his own card in each field.

Furthermore, cards other than field cards are categorized into creature cards, which comprise respective abilities and attributes, and rear support cards, which put previously stipulated functions to good use in specific situations. Over 300 kinds of creature cards exist.

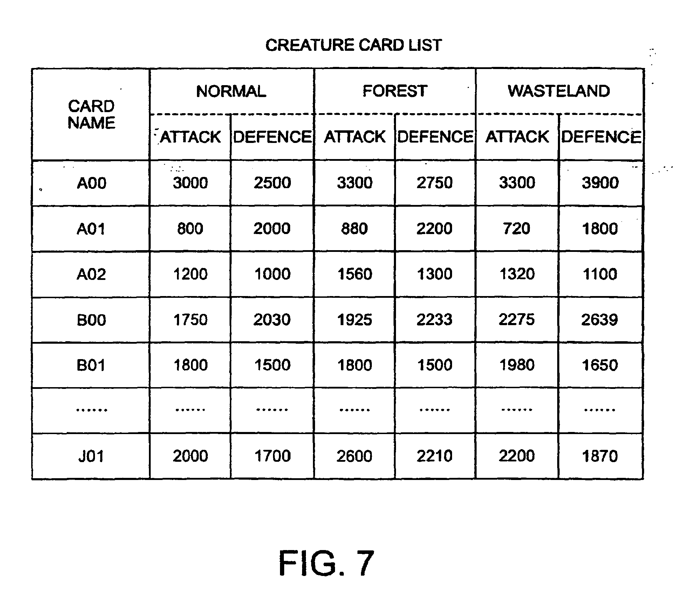

Fig. 7 shows a portion of a creature card list. As explained above, a creature card has an offensive and defensive power index for each field, and in this card game, the outcome of a battle is determined by comparing this index between cards. There are three fields here, normal, forest, and wilderness, and the offensive and defensive power indices are defined for each of fields.

Further, in actuality, a card name, which takes into consideration the attributes of a creature portrayed on a card, is assigned to each card shown in Fig. 7, but for the sake of brevity, the name of each card is given here as a reference numeral, such as A00, A01, and so forth.

Next, the way this game progresses will be explained. The game being played here can either be a game that competes against a program loaded into the program memory of a portable video game device (that is, the computer), or it can be a game that competes with another player, with whom communications is possible via infrared communication device or a communication cable.

The cards possessed by each player correspond to each of the cards as shown in Fig. 7. These cards are held in a storage portion called a bag, which was mentioned above. In this example, it is supposed that 300 cards are provided in the bag, and in addition to the cards in the bag being able to increase or decrease in accordance with the results of competition with the computer, or competition with another player through a communication network, these cards can also be exchanged by using communication network with another player.

According to the present invention, a portable video game device receives a remote control signal, encodes the signal to generate a code, and on the basis of the code, adds a card to the bag. Because the code has repeatability, that is, because the same card is added when the same button of the same remote control is pressed, the same kind of card can be increased infinitely. This means that once a person discovers a remote control button that produces a strong card, he can acquire this strong card in large numbers. However, since this would ultimately diminish interest in the game, in this game, only one card can be added for each kind of card by receiving a remote control signal. Further, such decisions are made by a program judging a flag created for each kind of card. Processing for adding a card based on a generated code will be explained below.

When a game is started, a player holding this portable video game device selects whether to compete against the computer, or to compete against another player. Hereinafter, the opposing computer or other player will simply be called the opponent, and the player operating this portable video game device and playing a game will be called this player.

First, a player selects on his own accord 40 cards from among the cards in the bag, and creates a set of cards, that is, a deck. However, when the game starts, a card cannot be added to a deck from the bag. Further, when creating a deck, it is not possible to select cards from among all of the above-mentioned creature cards. There are hidden cards, which a player cannot access.

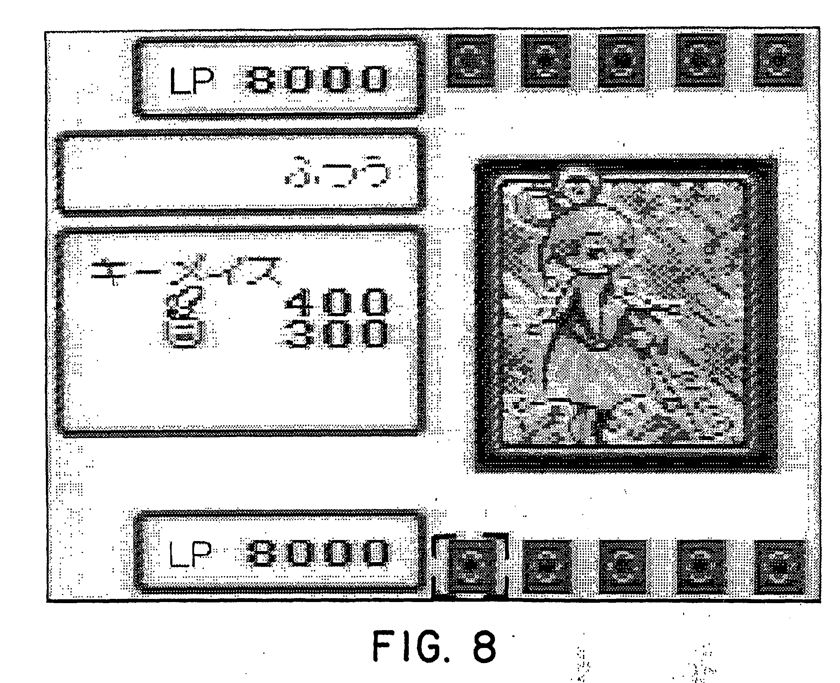

Next, Fig. 8 shows a state of competition in which the cards of a player and an opponent are lined up in specified zones. In this figure, this player's life points (LP), and the five cards of this player are arranged on the bottom, and the life points (LP) and the five cards of the opponent are arranged on the top. In other words, the five cards on the top and the bottom are arranged in special zones, respectively. In this state, all the cards are face down, such that the cards of the player and the opponent are displayed as small rectangular shapes. However, a player can check his cards, which is turned face down, by turning it face up one card at a time, but the opponent is participating in this game via a separate portable video game device, and, as a matter of course, is not able to see this player's cards.

In the screen shown in the figure, the player and the opponent each show a card, and the player places the card he selected in the space. In this state, one of either the player or the opponent selects either "Offensive" or "Defensive". Thereafter, the winning and losing cards are determined in accordance with a prescribed algorithm, and the life points of this player and the opponent are increased or decreased in accordance therewith. Ultimately, a competition is ended when one of the player's life points reach to 0, or the deck of cards runs out.

A more detailed explanation of this game will be omitted, but according to the present invention, the player and the opponent receive an additional card for use in competition by receiving a remote control signal. The added card is selected from among previously registered creature cards in accordance with the contents of a remote control signal. This also includes new cards that can only be acquired by receiving a remote control signal, in addition to the cards that the player and the opponent can select.

When a card is added, the portable video game display device displays which card was added. An identifying reference numeral, such as reference numerals A00, A01 of the above-mentioned creature cards, can also be utilized in this display. In accordance therewith, the player can see which card was added.

Because a card is added in accordance with the contents of a remote control signal that normally cannot be seen, it is possible to add an element of surprise to a game. Further, because the card that is added depends on the remote control channel, manufacturer, and product, the added enjoyment of adding a strong card by trying various remote controllers is also provided.

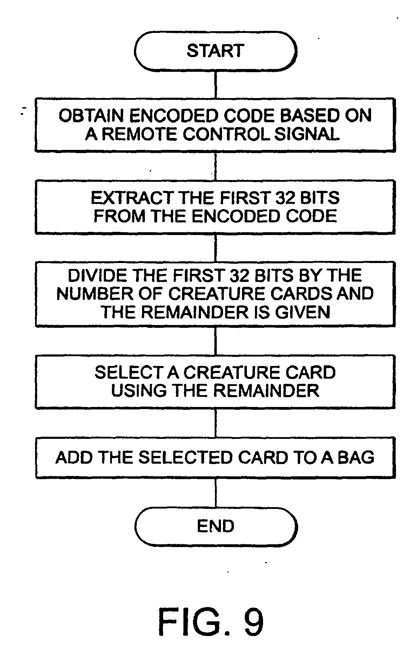

A detailed explanation will be given using the flowchart of Fig. 9, but the addition of a card here means adding to a bag as a player controllable item a card, which is not physically created as a new card, but rather prepared beforehand in the system, and which cannot be obtained by a player via normal operation.

Next, processing for determining a new card, and adding it to a bag will be explained in detail using Fig. 9. With regard to the above explanation of Fig. 6, an example, which produced a five bits of code was used, but this was to simplify the explanation. Because each code must have repeatability, and must each correspond to a different card, in actuality, each code is required to have a number of bits capable of expressing a number that is larger than the kinds of creature cards held in advance.

If a code obtained from the above-mentioned remote control signal data part is 32 bits or larger, this code can be made to correspond on a one-to-one basis to a maximum of 2³² cards.

It is supposed here that a code of a number of bits of 32 bits or larger is obtained from a remote control signal, and 310 creature cards have been registered beforehand (among the cards, 10 kinds of cards are kinds that cannot be added to a bag by the player or the opponent operation, that is, cards which can be obtained only by receiving a remote control signal).

Firstly, in Step S50 of Fig. 9, an encoded code is obtained from a remote control signal via the processing explained using Fig. 6. It is supposed that this code, as explained above, is a code of 32 bits or larger. Next, in Step S52, the first 32 bits are extracted from the code. Because the length of the data part of a remote control signal differs for each manufacturer, and each product, here the code used to determine a card is made a uniform 32 bits.

Next, in Step S54, the 32 bits of code extracted in Step S52 is divided by the number of kinds of creature cards (310 for our purposes here), and a remainder is obtained. In this case, the remainder is any number from 0-309. The 310 kinds of creature cards are made to correspond beforehand to any number from 0-309, and the creature card corresponding to the remainder determined at this time is selected as the card to be added to a bag. Finally, in Step S58, the selected creature card is added to a bag. The above-mentioned player or the opponent can use the added card in competition, and there are cases in which this greatly effects the outcome.

In this manner, a code determined from a remote control signal can be used as criteria for selecting a prescribed card, and it is also possible to create a card comprising completely new attributes and abilities. Further, for role playing games and the like, it is also possible to control a game's rules or story, or to create a new character based on this code.

Further, in the explanation of the present invention, it has been supposed that a card obtained on the basis of a signal transmitted from a specific button of a specific remote controller is the same no matter whose portable video game device receives it (has repeatability). However, it is also possible to obtain a card by combining the identification codes characteristically possessed by the above-mentioned remote control signal and the above-mentioned portable video game device. In this case, when one portable video game device A and another portable video game device B receive the same remote control signal, for example, each video game device generates a different card. An identification code is a code characteristically assigned to the above-mentioned portable video game device, and is expressed, for example, as a five digits of decimal numeric string. This code is not only numerals, but rather can also be constituted of characters, symbols, and combinations thereof. Further, this code is stored, for example, in the nonvolatile memory as shown in Fig. 2, and is read out therefrom when needed.

According to the present invention, there is provided a portable video game device, which receives infrared signal generated from a remote controller of a household television, a video, or an air conditioner, and indirectly reflects contents of the signal on a game.

Furthermore, according to the present invention, there is provided a portable video game device, which is capable of causing a change in a game based on invisible information, such as infrared signal generated from a remote controller.

And furthermore, according to the present invention, an item used in a game (for example, a card in a card game) is substantially added, and the item can be stored for later use.

And furthermore, according to the present invention, a signal from a remote controller can be encoded without using a previously stored waveform pattern, and even when a new waveform pattern signal is received, the signal can be properly encoded.

## Claims

1. A method of controlling a video game by using a communication function, comprising the steps of:
receiving infrared signals which are sent from a remote controller of an electric device and which include information used to control the electric device, said infrared signals being divided into a leader part, a data part, and a trailer part;
extracting the data part from the infrared signals to obtain an extracted data part by using the fact that a non-output period of the trailer part is longer than that of the data part;
generating a code by translating the extracted data part according to rules made in advance; and
adding an item in the video game on the basis of the code.

2. The method of claim 1, wherein the rules do not relate to information included in the infrared signals.

3. The method of claim 1 or 2, wherein the infrared signals include a control information part and a data part, the generating step detects the data part and generates the code on the basis of two-values of patterns included in the data part.

4. The method of claim 3, wherein the generating step counts the two-values of patterns and generates the code on the basis of the count value of the two-values of patterns.

5. The method of claim 1, 2, 3, or 4, wherein the video game is a card game, the item is a specific card determined according to the code.

6. The method of claim 5, wherein the specific card is determined based on the code and a code information uniquely assigned to a video game device (200, 300) performing the video game.

7. The method of claim 5 or 6, wherein the card game is performed in a base video game device (100), the specific card is added to cards used in the card game performed in the base video game device (100).

8. The method of claim 7, wherein the generating step and the adding step are performed in a memory card device (200) which can be attached to the base video game device (100) and removed from the base video game device (100).

9. The method of claim 8, wherein a program of the card game and information related to the card are downloaded into the memory card device (200) from the base video game device (100).

10. The method of claim 9, wherein the generating step is performed according to the program.

11. The method of claim 9 or 10, wherein the receiving step is performed according to the program.

12. The method of claim 9, 10 or 11, wherein the adding step is performed according to the program.

13. The method of claim 7, 8, 9, 10, 11, or 12 wherein the card game is performed in an independent portable video game device (300) which works independently.

14. A video game system which performs a predetermined video game, comprising:
a receiving unit operable in response to infrared signals which are sent from a remote controller of an electric device and which include information used to control the electric device, said infrared signals being divided into a leader part, a data part, and a trailer part;
extracting means for extracting the data part from the infrared signals to obtain an extracted data part by using the fact that a non-output period of the trailer part is longer than that of the data part;
a generating unit which generates a code by translating the extracted data part according to rules made in advance; and
an adding unit which adds an item in the video game on the basis of the code.

15. The video game system of claim 14, wherein the rules do not relate to information included in the infrared signals.

16. The video game system of claim 14 or 15, wherein the infrared signals includes a control information part and a data part, the generating unit detects the data part and generates the code on the basis of two-values of patterns included in the data part.

17. The video game system of claim 16, wherein the generating unit counts the two-values of patterns and generates the code on the basis of the count value of the two-values of patterns.

18. The video game system of claim 14, 15, 16 or 17, wherein the video game is a card game, the item is a specific card determined according to the code.

19. The video game system of claim 18, wherein the specific card is determined based on the code and a code information uniquely assigned to a video game device (200, 300) performing the video game.

20. The video game system of claim 18 or 19, wherein the card game is performed in a base video game device (100), the specific card is added to cards used in the card game performed in the base video game device (100).

21. The video game system of claim 20, wherein the generating unit and the adding unit are included in a memory card device (200) which can be attached to the base video game device (100) and removed from the base video game device (100).

22. The video game system of claim 21, wherein a program of the card game and information related to the card are downloaded into the memory card device (200) from the base video game device (100).

23. The video game system of claim 22, wherein the generating unit is controlled according to the program.

24. The video game system of claim 22 or 23, wherein the receiving unit is controlled according to the program.

25. The video game system of claim 22, 23, or 24, wherein the adding unit is controlled according to the program.

26. The video game system of claim 20, 21, 22, 23, 24 or 25, wherein the card game is performed in an independent portable video game device (300) which works independently.

27. A recording medium readable by a computer, tangibly embodying a program of controlling a video game using a communication function, the program comprising the steps of:
receiving infrared signals which are sent from a remote controller of an electric device and which include information used to control the electric device, said infrared signals being divided into a leader part, a data part, and a trailer part;
extracting the data part from the infrared signals to obtain an extracted data part by using the fact that a non-output period of the trailer part is longer than that of the data part;
generating a code by translating the extracted data part according to rules made in advance; and
adding an item in the video game on the basis of the code.

## Patentansprüche

1. Verfahren zum Steuern eines Videospiels unter Verwendung einer Kommunikationsfunktion, mit den Schritten:
Empfangen von Infrarotsignalen, die von einer Fernbedienung eines elektrischen Geräts übertragen werden und Information enthalten, die zum Steuern des elektrischen Geräts verwendet wird, wobei die Infrarotsignale in einen Anfangsabschnitt, einen Datenabschnitt und einen Endabschnitt geteilt sind;
Extrahieren des Datenabschnitts von den Infrarotsignalen zum Erhalten eines extrahierten Datenabschnitts unter Verwendung der Tatsache, dass eine Nichtausgabeperiode des Endabschnitts länger ist als diejenige des Datenabschnitts;
Erzeugen eines Codes durch Übersetzen des extrahierten Datenabschnitts gemäß im Voraus erstellten Regeln; und
Hinzufügen eines Elements zum Videospiel basierend auf dem Code.

2. Verfahren nach Anspruch 1, wobei die Regeln nicht mit in den Infrarotsignalen enthaltener Information in Beziehung stehen.

3. Verfahren nach Anspruch 1 oder 2, wobei die Infrarotsignale einen Steuerungsinformationsabschnitt und einen Datenabschnitt aufweisen, im Erzeugungsschritt der Datenabschnitt erfasst und der Code auf der Basis von im Datenabschnitt enthaltenen Zweiwerte-Mustern erzeugt wird.

4. Verfahren nach Anspruch 3, wobei im Erzeugungsschritt die Zweiwerte-Muster gezählt und der Code auf der Basis des Zählwertes der Zweiwerte-Muster erzeugt wird.

5. Verfahren nach Anspruch 1, 2, 3 oder 4, wobei das Videospiel ein Kartenspiel ist und das Element eine gemäß dem Code bestimmte spezifische Karte ist.

6. Verfahren nach Anspruch 5, wobei die spezifische Karte basierend auf dem Code bestimmt und eine Codeinformation einer Videospielvorrichtung (200, 300), auf der das Videospiel ausgeführt wird, eindeutig zugewiesen ist.

7. Verfahren nach Anspruch 5 oder 6, wobei das Kartenspiel in einer Basis-Videospielvorrichtung (100) ausgeführt wird und die spezifische Karte den Karten hinzugefügt wird, die in dem in der Basis-Videospielvorrichtung (100) ausgeführten Kartenspiel verwendet werden.

8. Verfahren nach Anspruch 7, wobei der Erzeugungsschritt und der Schritt zum Hinzufügen eines Elements in einer Speicherkartenvorrichtung (200) ausgeführt werden, die an der Basis-Videospielvorrichtung (100) befestigt und von der Basis-Videospielvorrichtung (100) entfernt werden kann.

9. Verfahren nach Anspruch 8, wobei ein Programm des Kartenspiels und mit der Karte in Beziehung stehende Information von der Basis-Videospielvorrichtung (100) in die Speicherkartenvorrichtung (200) heruntergeladen werden.

10. Verfahren nach Anspruch 9, wobei der Erzeugungsschritt gemäß dem Programm ausgeführt wird.

11. Verfahren nach Anspruch 9 oder 10, wobei der Empfangsschritt gemäß dem Programm ausgeführt wird.

12. Verfahren nach Anspruch 9, 10 oder 11, wobei der Schritt zum Hinzufügen eines Elements gemäß dem Programm ausgeführt wird.

13. Verfahren nach Anspruch 7, 8, 9, 10, 11 oder 12, wobei das Kartenspiel in einer unabhängigen tragbaren Videospielvorrichtung (300) ausgeführt wird, die unabhängig arbeitet.

14. Videospielsystem zum Ausführen eines vorgegebenen Videospiels, mit:
einer Empfangseinheit, die in Antwort auf Infrarotsignale arbeitet, die von einer Fernbedienung eines elektrischen Geräts übertragen werden und Information enthalten, die zum Steuern des elektrischen Geräts verwendet wird, wobei die Infrarotsignale in einen Anfangsabschnitt, einen Datenabschnitt und einen Endabschnitt geteilt sind;
einer Extraktionseinheit zum Extrahieren des Datenabschnitts von den Infrarotsignalen zum Erhalten eines extrahierten Datenabschnitts unter Verwendung der Tatsache, dass eine Nichtausgabeperiode des Endabschnitts länger ist als diejenige des Datenabschnitts;
einer Erzeugungseinheit zum Erzeugen eines Codes durch Übersetzen des extrahierten Datenabschnitts gemäß im Voraus erstellten Regeln; und
einer Einheit zum Hinzufügen eines Elements zum Videospiel basierend auf dem Code.

15. System nach Anspruch 14, wobei die Regeln nicht mit in den Infrarotsignalen enthaltener Information in Beziehung stehen.

16. System nach Anspruch 14 oder 15, wobei die Infrarotsignale einen Steuerungsinformationsabschnitt und einen Datenabschnitt aufweisen, die Erzeugungseinheit den Datenabschnitt erfasst und den Code auf der Basis von im Datenabschnitt enthaltenen Zweiwerte-Mustern erzeugt.

17. System nach Anspruch 16, wobei die Erzeugungseinheit die Zweiwerte-Muster zählt und den Code auf der Basis des Zählwertes der Zweiwerte-Muster erzeugt.

18. System nach Anspruch 14, 15, 16 oder 17, wobei das Videospiel ein Kartenspiel ist und das Element eine gemäß dem Code bestimmte spezifische Karte ist.

19. System nach Anspruch 18, wobei die spezifische Karte basierend auf dem Code bestimmt und eine Codeinformation einer Videospielvorrichtung (200, 300), auf der das Videospiel ausgeführt wird, eindeutig zugewiesen wird.

20. System nach Anspruch 18 oder 19, wobei das Kartenspiel in einer Basis-Videospielvorrichtung (100) ausgeführt wird und die spezifische Karte den Karten hinzugefügt wird, die in dem in der Basis-Videospielvorrichtung (100) ausgeführten Kartenspiel verwendet werden.

21. System nach Anspruch 20, wobei die Erzeugungseinheit und die Einheit zum Hinzufügen eines Elements in einer Speicherkartenvorrichtung (200) angeordnet sind, die an der Basis-Videospielvorrichtung (100) befestigt und von der Basis-Videospielvorrichtung (100) entfernt werden kann.

22. System nach Anspruch 21, wobei ein Programm eines Kartenspiels und mit der Karte in Beziehung stehende Information von der Basis-Videospielvorrichtung (100) in die Speicherkartenvorrichtung (200) heruntergeladen werden.

23. System nach Anspruch 22, wobei die Erzeugungseinheit gemäß dem Programm gesteuert wird.

24. System nach Anspruch 22 oder 23, wobei die Empfangseinheit gemäß dem Programm gesteuert wird.

25. System nach Anspruch 22, 23 oder 24, wobei die Einheit zum Hinzufügen eines Elements gemäß dem Programm gesteuert wird.

26. System nach Anspruch 20, 21, 22, 23, 24 oder 25, wobei das Kartenspiel in einer unabhängigen tragbaren Videospielvorrichtung (300) ausgeführt wird, die unabhängig arbeitet.

27. Computerlesbares Aufzeichnungsmedium, das ein Programm zum Steuern eines Videospiels unter Verwendung einer Kommunikationsfunktion steuert, wobei das Programm die Schritte aufweist:
Empfangen von Infrarotsignalen, die von einer Fernbedienung eines elektrischen Geräts übertragen werden und Information enthalten, die zum Steuern des elektrischen Geräts verwendet wird, wobei die Infrarotsignale in einen Anfangsabschnitt, einen Datenabschnitt und einen Endabschnitt geteilt sind;
Extrahieren des Datenabschnitts von den Infrarotsignalen zum Erhalten eines extrahierten Datenabschnitts unter Verwendung der Tatsache, dass eine Nichtausgabeperiode des Endabschnitts länger ist als diejenige des Datenabschnitts;
Erzeugen eines Codes durch Übersetzen des extrahierten Datenabschnitts gemäß im Voraus erstellten Regeln; und
Hinzufügen eines Elements zum Videospiel basierend auf dem Code.

## Revendications

1. Méthode de contrôle d'un jeu vidéo en utilisant une fonction de communication, comprenant les étapes consistant à :
recevoir des signaux infrarouges qui sont envoyés à partir d'une commande à distance d'un dispositif électrique et qui comprennent des informations utilisées pour commander le dispositif électrique, lesdits signaux infrarouges étant divisés en une partie amorce de début, une partie données, et une partie amorce de fin ;
extraire la partie données des signaux infrarouges pour obtenir une partie données extraites en utilisant le fait qu'une période de non délivrance de signaux de la partie amorce de fin est plus longue que celle de la partie données ;
générer un code en traduisant la partie données extraites selon des règles fixées à l'avance ; et
ajouter un article dans le jeu vidéo sur la base du code.

2. Méthode selon la revendication 1, dans laquelle les règles ne se rapportent pas aux informations comprises dans les signaux infrarouges.

3. Méthode selon la revendication 1 ou 2 dans laquelle les signaux infrarouges comprennent une partie information de commande et une partie données, l'étape de génération détecte la partie données et génère le code sur la base de deux valeurs de modèles comprises dans la partie données.

4. Méthode selon la revendication 3, dans laquelle l'étape de génération compte les deux valeurs de modèles et génère le code sur la base de la valeur d'un comptage des deux valeurs de modèles.

5. Méthode selon la revendication 1, 2, 3, ou 4 dans laquelle le jeu vidéo est un jeu de cartes, l'article est une carte spécifique déterminée en fonction du code.

6. Méthode selon la revendication 5, dans laquelle la carte spécifique est déterminée en se basant sur le code et sur une information de code uniquement affectée à un dispositif de jeu vidéo (200, 300) exécutant le jeu vidéo.

7. Méthode selon la revendication 5 ou 6, dans laquelle le jeu de cartes est exécuté dans un dispositif de jeu vidéo de base (100), la carte spécifique est ajoutée à des cartes utilisées dans le jeu de cartes exécuté dans le dispositif de jeu vidéo de base (100).

8. Méthode selon la revendication 7, dans laquelle l'étape de génération et l'étape d'ajout sont exécutées dans un dispositif de carte mémoire (200) qui peut être fixé sur le dispositif de jeu vidéo de base (100) et retiré du dispositif de jeu vidéo de base (100).

9. Méthode selon la revendication 8, dans laquelle un programme du jeu de cartes et des informations se rapportant à la carte sont téléchargés dans le dispositif de carte mémoire (200) à partir du dispositif de jeu vidéo de base (100).

10. Méthode selon la revendication 9, dans laquelle l'étape de génération est exécutée selon le programme.

11. Méthode selon la revendication 9 ou 10, dans laquelle l'étape de réception est exécutée selon le programme.

12. Méthode selon la revendication 9, 10 ou 11, dans laquelle l'étape d'ajout est exécutée selon le programme.

13. Méthode selon la revendication 7, 8, 9, 10, 11 ou 12, dans laquelle le jeu de cartes est exécuté dans un dispositif de jeu vidéo portable indépendant (300) qui fonctionne indépendamment.

14. Système de jeu vidéo qui exécute un jeu vidéo prédéterminé, comprenant :
une unité de réception opérable en réponse aux signaux infrarouges qui sont envoyés à partir d'une commande à distance d'un dispositif électrique et qui comprennent des informations utilisées pour commander le dispositif électrique, lesdits signaux infrarouges étant divisés en une partie amorce de début, une partie données, et une partie amorce de fin ;
un moyen d'extraction pour extraire la partie donnée des signaux infrarouges pour obtenir une partie données extraites en utilisant le fait qu'une période de non délivrance de signaux de la partie amorce de fin est plus longue que celle de la partie données ;
une unité de génération qui génère un code en traduisant la partie données extraites en fonction de règles fixées à l'avance ; et
une unité d'ajout qui ajoute un article dans le jeu vidéo sur la base du code.

15. Système de jeu vidéo selon la revendication 14, dans lequel les règles ne se rapportent pas aux informations comprises dans les signaux infrarouges.

16. Système de jeu vidéo selon la revendication 14 ou 15, dans lequel les signaux infrarouges comprennent une partie information de commande et une partie données, l'unité de génération détecte la partie données et génère le code sur la base de deux valeurs de modèles comprises dans la partie données.

17. Système de jeu vidéo selon la revendication 16, dans lequel l'unité de génération compte les deux valeurs de modèles et génère le code sur la base de la valeur d'un comptage des deux valeurs de modèles.

18. Système de jeu vidéo selon la revendication 14, 15, 16 ou 17, dans lequel le jeu vidéo est un jeu de cartes, l'article est une carte spécifique déterminée selon le code.

19. Système de jeu vidéo selon la revendication 18, dans lequel la carte spécifique est déterminée en se basant sur le code et une information de code uniquement affectée à un dispositif de jeu vidéo (200, 300) exécutant le jeu vidéo.

20. Système de jeu vidéo selon la revendication 18 ou 19, dans lequel le jeu de cartes est exécuté dans un dispositif de jeu vidéo de base (100), la carte spécifique est ajoutée à des cartes utilisées dans le jeu de cartes exécuté dans le dispositif de jeu vidéo de base (100).

21. Système de jeu vidéo selon la revendication 20, dans lequel l'unité de génération et l'unité d'ajout sont comprises dans un dispositif de carte mémoire (200) qui peut être fixé sur le dispositif de jeu vidéo de base (100) et retiré du dispositif de jeu vidéo de base (100).

22. Système de jeu vidéo selon la revendication 21, dans lequel un programme du jeu de cartes et des informations se rapportant à la carte sont téléchargés dans le dispositif de carte mémoire (200) à partir du dispositif de jeu vidéo de base (100).

23. Système de jeu vidéo selon la revendication 22, dans lequel l'unité de génération est commandée selon le programme.

24. Système de jeu vidéo selon la revendication 22 ou 23, dans lequel l'unité de réception est commandée selon le programme.

25. Système de jeu vidéo selon la revendication 22, 23 ou 24, dans lequel l'unité d'ajout est commandée selon le programme.

26. Système de jeu vidéo selon la revendication 20, 21, 22, 23, 24 ou 25, dans lequel le jeu de cartes est exécuté dans un dispositif de jeu vidéo portable indépendant (300) qui fonctionne indépendamment.

27. Support d'enregistrement lisible par un ordinateur, réunissant de façon tangible un programme de commande de jeu vidéo utilisant une fonction de communication, le programme comprenant les étapes consistant à :
recevoir des signaux infrarouges qui sont envoyés à partir d'une commande à distance d'un dispositif électrique et qui comprennent des informations utilisées pour commander le dispositif électrique, lesdits signaux infrarouges étant divisés en une partie amorce de début, une partie données, et une partie amorce de fin ;
extraire la partie données des signaux infrarouges pour obtenir une partie données extraites en utilisant le fait qu'une période de non délivrance de signaux de la partie amorce de fin est plus longue que celle de la partie données ;
générer un code en traduisant la partie données extraites selon des règles fixées à l'avance ; et
ajouter un article dans le jeu vidéo sur la base du code.
